# EUROPÄISCHE PATENTANMELDUNG

(11) **EP 0 807 673 A1**
(43) Veröffentlichungstag der Anmeldung: **19.11.1997**
(21) Anmeldenummer: 96107728.6
(22) Anmeldetag: 15.05.1996
(51) Int. Cl.: C09J 7/02, B24B 13/005, B24B 37/04

(54) **Klebeschutzfolie für optische Gläser sowie Verfahren zu ihrer Entfernung**

(71) Anmelder: HAMO AG, CH-2542 Pieterlen (CH); RMH Polymers GmbH & Co. KG, 06258 Schkopau (DE)
(72) Erfinder: Moser, Hansruedi, 2532 Magglingen (CH); Bracher, Hanspeter, 3296 Arch (CH); Hauk, Jürgen, Dr., 06114 Halle (DE); Hüfftlein, Karlheinz, 70563 Stuttgart (DE); Schumacher, Rainer, Dr., 06217 Merseburg (DE); Hardeweg, Heike, geb. Wartenberg, 06108 Halle (DE)
(74) Vertreter: Pauling, Hans-Jürgen

(57) **Zusammenfassung**

Eine in wässrigen alkalischen Lösungen rückstandsfrei wiederauflösbare Schutzfolie wird verwendet, um einen Halter auf einem optischen Glas zu befestigen, um dieses während der mechanischen Bearbeitung halten zu können. Nach der mechanischen Bearbeitung des optischen Glases und dem Entfernen des Halters, z. B. durch Abschmelzen einer tiefschmelzenden Legierung auf der Kontaktfläche mit der Folie, wird die Schutzfolie durch Einwirkung wässriger alkalischer Lösungen aufgelöst.
Ein optisches Glas mit Halter kann dadurch in eine vollautomatisch arbeitende Spülmaschine (2) gegeben werden, wobei die Spülmaschine (2) das Entfernen des Halters, der Schutzfolie und die üblichen weiteren Reinigungsschritte vollautomatisch durchführt.

## Beschreibung

Die vorliegende Erfindung betrifft eine Verwendung einer Folie gemäß Oberbegriff des Anspruches 1. Im weiteren betrifft die Erfindung auch Verfahren und Vorrichtung zur Reinigung von optischen Gläsern gemäß den Oberbegriffen der weiteren unabhängigen Ansprüche

Optische Gläser werden vor ihrer Verwendung in eine vorgegebene Form gebracht. Üblicherweise erfolgt dies durch Schleifen oder ähnliche, mechanische Verfahren. Während der Bearbeitung werden die optischen Gläser an einem Halter befestigt. Der Halter weist eine Kontaktfläche auf, die aus einer niedrig schmelzenden Legierung besteht. Mit dieser Fläche wird der Halter auf das mit einer Schutzfolie überzogene optische Glas aufgesetzt.

Nach der Bearbeitung müssen sowohl Halter wie auch Schutzfolie vom optischen Glas entfernt werden, ohne daß dessen Güte vermindert wird. Der Halter wird entfernt, indem die Gesamtanordnung über den Schmelzpunkt der Legierung erhitzt wird. Üblicherweise werden Legierungen mit einem Schmelzpunkt von z. B. 47° C verwendet. Diese Temperaturen werden problemlos in einem heißen Wasserbad erreicht.

Die Schutzfolie muß danach manuell von den optischen Gläsern abgezogen werden. Dabei geschieht es häufig, daß sich die Schutzfolie nicht vollständig löst. Die verbleibenden Folienfragmente müssen dann aufwendig in Handarbeit entfernt werden.

Es sind zwar in wässrigen Alkalien wiederauflösbare Klebefolien aus der EP 0316676 A2 bekannt, die aber aufgrund ihrer Herstellung nicht formbeständig und deshalb für den angegebenen Zweck nicht verwendbar sind.

Nachteilig am bekannten Stand der Technik ist also, daß die Schutzfolie in einem manuellen Schritt entfernt werden muß, wodurch eine durchgehende Automatisierung des Reinigungsvorganges der optische Gläser nach dem Bearbeiten inkl. Entfernen des Halters nicht möglich ist. Außerdem ist oft die oben aufgeführte Entfernung von Resten der Schutzfolie und eine entsprechende genaue Kontrolle der Oberfläche der optischen Gläser auf solche Spuren nötig.
Eine Aufgabe der vorliegenden Erfindung ist es daher, eine Schutzfolie anzugeben, mit der zumindest einer der oben genannten Nachteile vermieden werden kann.

Diese Aufgabe wird durch die Verwendung einer Schutzfolie gemäß Anspruch 1 gelöst. Die weiteren unabhängigen Ansprüche geben Reinigungsverfahren und -vorrichtungen für die Reinigung optischer Gläser an. Die Ansprüche definieren bevorzugte Ausführungsformen der Erfindung.

Gemäß der Erfindung wird also eine wiederauflösbare Folie als Schutzfolie 21 zwischen Halter 23 und optischem Glas 22 verwendet. Diese Folie ist beständig gegen Wasser, das bei der mechanischen Bearbeitung der Gläser zum Spülen, Kühlen und als Schleifhilfsmittel eingesetzt wird. Nach erfolgter Bearbeitung wird die Folie in wässrigen alkalischen Lösungen rückstandfrei aufgelöst.
Ausreichend dafür sind geringe Konzentrationen von Alkalihydroxiden oder bekannten Industriereinigungsmitteln.

Mit einer solchen Schutzfolie ist es nun möglich, einer im wesentlichen bekannten Reinigungsanlage für optische Gläser Stufen vorzuschalten, die das Auflösen der Schutzfolie und bevorzugt auch das Auflösen des Halters durchführen. Dabei ist für keinen der Schritte ein manueller Eingriff mehr möglich.

Ein weiterer Vorteil der erfindungsgemäßen Lösung ist es, daß die aufgelöste Schutzfolie durch Ansäuern ausgefallt und mit mechanischen Trennoperationen einer Wiederverwendung zugeführt werden kann.
Die zur Wiederauflösung verwendete wässrige alkalische Lösung kann durch Zusatz von Hydroxiden u.ä. mehrfach verwendet werden.

Die Erfindung soll weiterhin an einem bevorzugten Ausführungsbeispiel dargestellt werden. Für die beispielhafte Reinigungsvorrichtung wird dabei auf Figuren Bezug genommen.

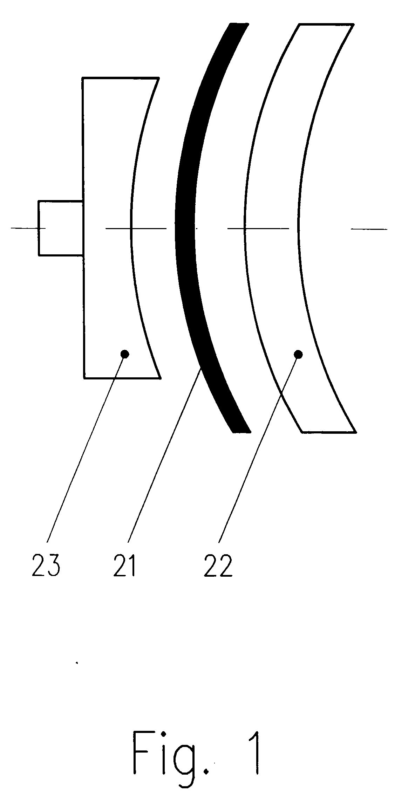

- Figur 1: zeigt das Schema der Fixierung von optischen Gläsern; und

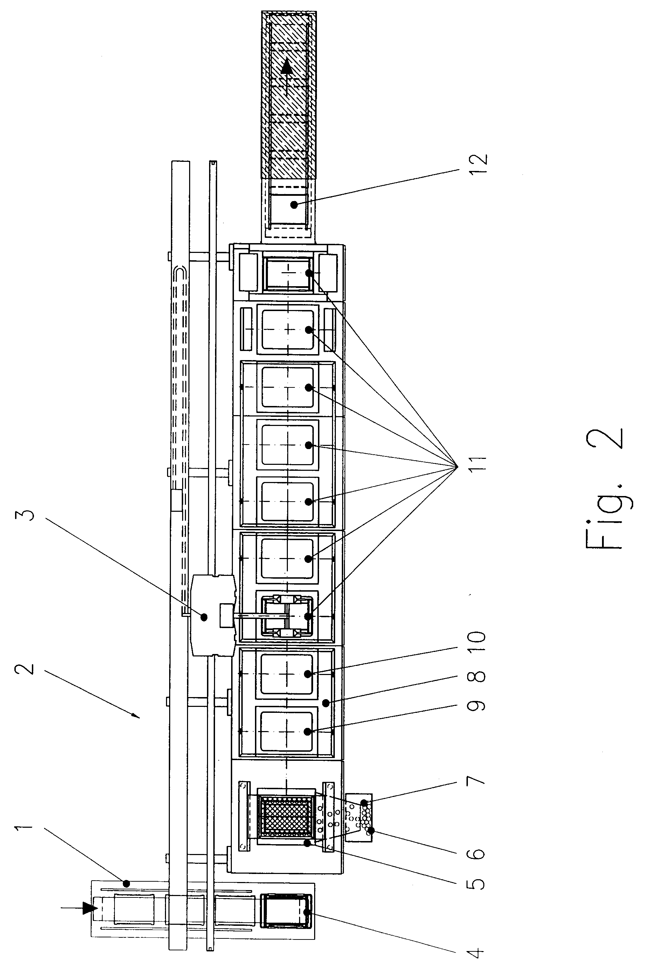

- Figur 2: zeigt eine schematische Draufsicht auf eine erfindungsgemäße Reinigungsanlage.

Für die Schutzfolie wird insbesondere ein Verbund aus Folie und Klebstoffilm bevorzugt, der in der DE-Patentanmeldung 19536048.6 angemeldet am 28.09.1995, beschrieben ist. Als Schutzfolie wird danach eine formbeständige, 10 bis 300 µm starke Folie aus Acrylat-Copolymerisaten der Molmassen 80.000 bis 300.000 mit 2 bis 7 % Termonomeren, die mit einem 5 bis 100 µm starken Klebstoffilm aus Acrylat-Copolymerisaten der Molmassen 10.000 bis 120.000 mit 1 bis 5 Gew.% Termonomeren beschichtet ist, verwendet.

Die verwendete Schutzfolie wird in extrem kurzer Zeit durch wässrige alkalische Lösungen, die bis zu 2 % Alkalihydroxide oder bis zu 1 % Industriereinigungsmitteln enthalten, rückstandsfrei aufgelöst.

In der Verwendung wird die Folie 21 in der Art eines Klebebandes auf die, optischen Gläser 22 in der Rohform aufgebracht und dann der Halter 23 auf die Schutzfolie 21 aufgesetzt.

Nach der mechanischen Bearbeitung der optischen Gläser werden diese samt Halter in speziell gestaltete Spülkörbe eingesetzt. Diese Spülkörbe weisen Halterungen auf, die an den optischen Gläsern selbst angreifen, ohne diese jedoch zu verletzen. Derartige Spülkörbe sind an sich bekannt.

Die Spülkörbe mit den Gläsern werden zunächst in die Eingangssektion 1 einer Spülmaschine 2 gestellt. Von dort holt sie eine Transportvorrichtung 3 ab, die sich über die gesamte Länge der Spülmaschine 2 bewegen kann. Zunächst wird der Spülkorb 4 in die Abschmelzstation 5 verbracht. Durch Eintauchen oder Bespritzen mit heißem Wasser, oberhalb der Schmelztemperatur der Legierungsschicht des Halters wird die Legierung geschmolzen und der Halter 7 wird in einer Auffangwanne 6 gesammelt.
Sie können mit einer neuen Legierungsschicht versehen und in den Produktionsprozeß zurückgeführt werden.

An die Abschmelzstation 5 schließt sich die Station 8 zum Ablösen der Schutzfolie an. Sie besteht aus zwei Bädern: dem Reinigungsbad 9 und dem Spülbad 10. Im Reinigungsbad befindet sich ein Reinigungsmittel, das in der Lage ist, die Schutzfolie rückstandsfrei aufzulösen. Geeignet sind z. B. folgende: 1 %-ige Soda-Lösung oder 0,5 %-ige P3-mip Lösung.

Zur Unterstützung der Lösungswirkung des Reinigungsmittels werden zusätzlich Wärme, Ultraschall und Umwälzung des Reinigungsmittels eingesetzt. Diese Maßnahmen sind an sich bekannt und daher nicht detailliert dargestellt.

Nach einer vorgegebenen Reinigungszeit, die sicherstellt, daß die Schutzfolie entfernt ist, wird der Spülkorb aus dem Reinigungsbad in
das Spülbad überführt, in dem Reste des Reinigungsmittels entfernt werden. Danach durchläuft der Spülkorb die weiteren Stationen 11 der Spülmaschine, die aus vorbekannten Spülmaschinen zur Nachreinigung optischer Gläser bekannt sind und daher hier nicht beschrieben werden müssen. Am Ende wird der Spülkorb mit den einwandfrei gereinigten optischen Gläsern in der Ausgabesektion 12 abgesetzt.

Es ist aus der oben dargestellten Beschreibung einer Spülmaschine und einem damit durchgeführten Reinigungsverfahren offensichtlich, daß mit der erfindungsmäßigen Verwendung einer wiederauflösbaren Folie es nun möglich ist, einen vollständig automatisierten Reinigungsvorgang für optische Gläser nach der mechanischen Behandlung durchzuführen.

Abänderungen des beschriebenen Ausführungsbeispieles sind dem Fachmann ersichtlich ohne den Bereich der Erfindung zu verlassen.

## Patentansprüche

1. Wiederauflösbare Schutzfolie zur Befestigung von optischen Gläsern an Haltern zum Zwecke der mechanischen Bearbeitung der Gläser, dadurch gekennzeichnet, daß eine formbeständige Folie einer Stärke von 10 bis 300 µm, bestehend aus Acryl-Copolymerisaten der Molmassen von 80.000 bis 300.000 mit 2 bis 7 Gew.-% Termonomeren, beschichtet mit einem Klebstoffilm der Stärke von 5 bis 100 µm aus Acrylat-Copolymerisaten der Molmassen 10.000 bis 120.000 mit 1 bis 5 Gew.- % Temonomeren verwendet wird.

2. Wiederauflösbare Schutzfolie gemäß Anspruch 1, dadurch gekennzeichnet, daß als Schutzfolie ein Verbund aus Folie und Klebstoffilm mit einer maximalen Restfeuchte von 5 % verwendet wird.

3. Verfahren zum Entfernen eine Halters von einem optische Glas, wobei sich zwischen Halter und optischen Glas eine Schutzfolie befindet, dadurch gekennzeichnet, daß die Schutzfolie unter Verwendung wässriger alkalischer Lösungen rückstandsfrei aufgelöst wird.

4. Verfahren gemäß Anspruch 8, dadurch gekennzeichnet, daß die wässrigen Lösungen bis zu 2 % Alkalihydroxide enthalten.

5. Verfahren gemäß Anspruch 3, dadurch gekennzeichnet, daß die wässrigen Lösungen 0,1 - 1 % Industriereinigungsmittel enthalten.

6. Verfahren gemäß Anspruch 3, dadurch gekennzeichnet, daß die rückstandfreie Auflösung im Zeitraum bis zu 60 s erfolgt.

7. Vorrichtung zum Ausführen des Verfahrens gemäß einem der Ansprüche 4 bis 6 dadurch gekennzeichnet, daß vor einer Spülmaschine (11) für optische Gläser eine Vorrichtung (9) zum Auflösen der Schutzfolie angeordnet ist.

8. Vorrichtung gemäß Anspruch 7, dadurch gekennzeichnet, daß vor der Auflösungsvorrichtung (9) eine Abschmelzvorrichtung (5) zum Abschmelzen der Legierung des Halters angeordnet ist, die die Kontaktfläche zur Schutzfolie darstellt.

9. Vorrichtung gemäß der Ansprüche 7 oder 8, dadurch gekennzeichnet, daß Transport- (3) und Steuermittel vorhanden sind, durch die die optischen Gläser innerhalb der Vorrichtung ohne manuellen Eingriffbewegbar sind.
